# EUROPEAN PATENT APPLICATION

(11) **EP 1 589 700 A2**
(43) Date of publication of application: **26.10.2005**
(21) Application number: 05008476.3
(22) Date of filing: 19.04.2005
(51) Int. Cl.: H04L 12/28, H04L 29/12

(54) **System and method of assigning unique network code to devices connected in a home network**

(30) Priority: 19.04.2004 KR 2004026792
(71) Applicant: LG ELECTRONICS INC., Seoul 150-010 (KR)
(72) Inventor: Lee, Sang Kyun, Gwangmyung-si Kyunggi-do, 423-060 (KR); Chung, Jong Hoon, Goonpo-si Kyunggi-do, 435-751 (KR)
(74) Representative: Vetter, Ewald Otto

(57) **Abstract**

A method of assigning a network code to devices connected to a home network is provided. The method comprises determining whether a network code is requested to initialize a home network; determining whether a network code is requested to add a device to the home network; creating a network code, when it is determined that the request is for initializing a home network; determining whether or not the created network code is in use; and assigning the created network code to at least a device connected to the home network, when the created network code is not in use.

## Description

### BACKGROUND OF THE INVENTION

### Field of the Invention

The present invention relates to a method of assigning and setting a unique network code to devices in a home network system such that the network system is shielded from interference by neighboring home networks by prohibiting devices in the network system from being accessed by other devices outside the network.

### Description of the Related Art

A home network system, which has attracted attention recently in the information technology industry, enables one to connect a home server to electronic appliances that communicate with each other so that a particular device can be monitored and controlled through the home network.

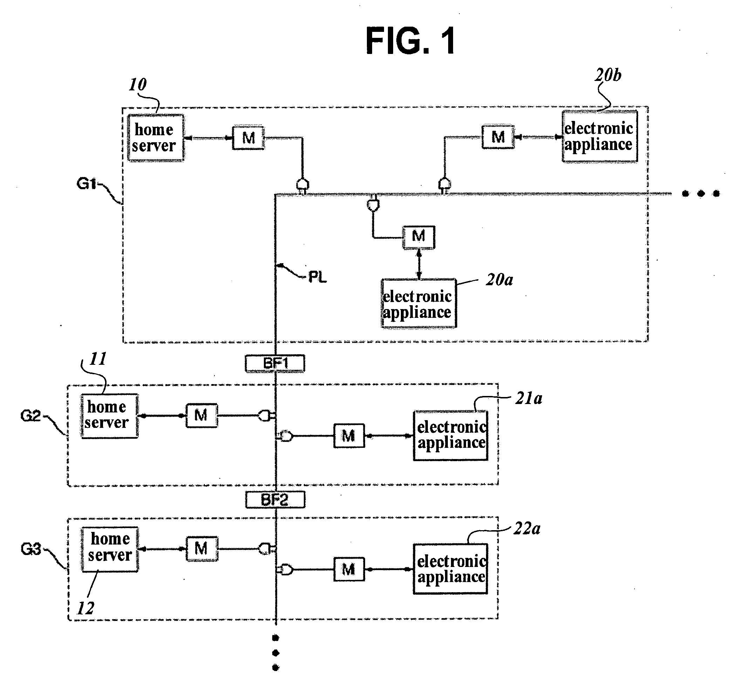

Power lines can be used as a physical communication channel for a home network. If power line communication is used as network communication means, as shown in Fig. 1, a home network can be easily established with no additional cost for cabling because various electronic appliances are able to exchange data between each other via their existing power supply cables.

The power lines interconnecting the various electronic appliances are, however, connected to neighboring houses or buildings. Hence, data exchanged between appliances in a home network established within a particular house or building may be transmitted to neighboring home networks through the power lines.

For instance, Fig. 1 illustrates one possible embodiment where three distinct home networks G1, G2, G3 are connected on the same power line. Electronic appliances 20a and 20b can be in the network G1, appliance 21a can be in the network G2, and appliance 22a can be in the network G3. All are interconnected through a common power line PL. Consequently, control commands from either home server 10, 11, or 12 in each home network can be received by electronic appliances belonging to neighboring home networks unintentionally.

To solve the problem, a network administrator of each home network makes the home network virtually private from neighboring home networks by assigning and setting a home code to devices connected to the home network. By using a home code, it is possible to enable communication between devices having the same home code. This is because devices with different home codes are not able to communicate with each other.

A conventional method of assigning and setting a home code in a home network may be as follows. When an electronic appliance is initially connected to the home network, a user requests a home server to assign a home code to the newly connected appliance and then the home server sends a home code to the newly connected appliance. When a home network is initially set up, a user may request the home server to set a home code for the set-up of the home network. In response to the request, the home server creates a home code and then broadcasts the home code to all of electronic appliances connected to the home network.

In the conventional method, when a user requests a home server to get a home code, the user must actively indicate to the home server of whether the request is due to the initial establishment of a home network or due to the connection of a new appliance to an already established home network. This is inconvenient and may be even troublesome because a user may make a mistake. For example, if a user adds a new appliance to an existing home network and requests a home code for the home network set-up, a home server may ignore the request because a home code has been set already, thereby not guaranteeing a normal operation of the home network.
A method and system is needed to overcome the above shortcoming.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings. To achieve these and other advantages and in accordance with the purpose of the present invention, as embodied and broadly described, a method of assigning a network code to devices connected to a home network is provided.

The method comprises determining whether a network code is requested to initialize a home network; determining whether a network code is requested to add a device to the home network; creating a network code, when it is determined that the request is for initializing a home network; determining whether or not the created network code is in use; and assigning the created network code to at least a device connected to the home network, when the created network code is not in use.

In one embodiment, the method further comprises broadcasting a first message to request at least one of initializing a home network and adding a device to the home network, wherein if there is no response to the first message, it is determined that the home network code was requested to initialize the home network, and broadcasting a first message to request at least one of initializing a home network and adding a device to the home network. If there is a response to the first message, it is determined that the home network code was requested to add a device to the home network.

In another embodiment, the method further comprises broadcasting a second message requesting a response from a device connected to the home network, wherein if there is a response to the second message, it is determined that the created network code is being used.

In yet another embodiment, the method further comprises broadcasting a second message requesting a response from a device connected to the home network, wherein if there is no response to the second message, it is determined that the created network code is not being used.

A created network code is in use if the network code is assigned to a second network connected to the home network. The second network is connected to the home network via at least one of a wired and wireless communication means. In some embodiments, a second network code is created if the created network code is in use. If it is determined that the home network code request is for adding a device to the home network, a previously created network code is provided to a newly connected device.

In accordance with another aspect of the system, a home network system to which at least one device is connected. The home network comprises a device having states and operations that can be monitored and controlled through the home network; and a network manager that, upon a request for a network code, determines whether the home network code is requested to at least one of initialize the home network and to add a device to the home network.

The network manager creates a network code if it is determined that the request is for network initialization. The network manager determines whether the created network code is being used. The network manager assigns the created network code to devices connected to the home network, if it is determined that the created network code is not being used.

In one embodiment, the home network manager comprises a communication module that creates the home network code and communicates with the home network; and a control module that determines whether the home network code is requested to initialize the home network or to add a device to the home network, wherein if it is determined that the request is to initialize the home network, the control module sends a command to the communication module to create a network code, determine whether the created network code is being used in other networks, and broadcasts the created network code to the home network in a first message via the communication module if the created network code is not being used in other networks.

In an exemplary embodiment, the created network code is included in a header of the first message. The home network manager broadcasts a second message to request a response from devices connected to the home network, and if there is no response to the second message, the home network manager determines that the home network code request was made to initialize the home network.

The home network manager broadcasts a second message to request a response from devices connected to the home network, and if there is a response to the second message, the home network manager determines that the home network code request was made to add a device to the home network.

After creating a network code, the home network manager broadcasts a message that requests a response to the home network, and if there is a response to the message, determines that the created network code is being used, and determines that the created network code is not being used in other networks, if there is no response to the message.

These and other embodiments of the present invention will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

Fig. 1 illustrates a configuration of a home network system implemented over a power line instruction in accordance with one embodiment.

Fig. 2 illustrates a configuration of a home network system in accordance with another embodiment.

Fig. 3 is a flowchart of a method of assigning and setting a home code in a home network system, in accordance with one embodiment.

Features, elements, and aspects of the invention that are referenced by the same numerals in different figures represent the same, equivalent, or similar features, elements, or aspects in accordance with one or more embodiments of the system.

### DETAILED DESCRIPTION OF THE INVENTION

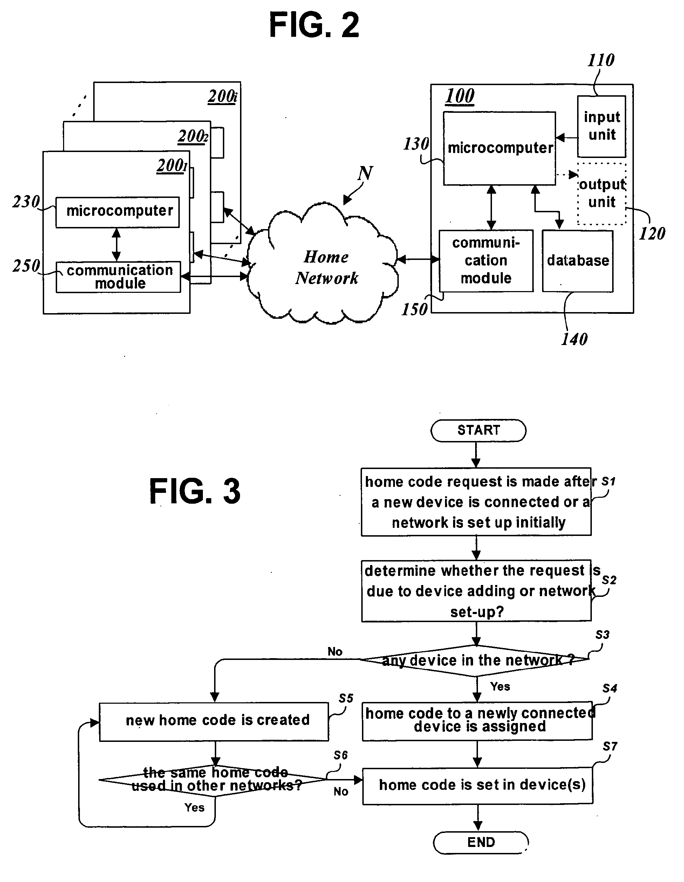

Fig. 2 illustrates a home network system N to which electronic devices 200₁ to 200ᵢ may be connected. A network manager 100 controls communication between electronic devices 200₁ to 200ᵢ and assigns a home code to each of the electronic devices. When a home server is connected to the network N, the network manager 100 may be embedded in the home server.

In accordance with one embodiment, a unique home code that is 4 bytes in length, for example, may be assigned to a home. If there are multiple home servers in a home, the various electronic devices may be grouped by various home servers and a distinct home code may be uniquely assigned to each group. In this example, multiple virtual sub-networks may be configured in a home.

In an exemplary embodiment, the network manager 100 comprises a microcomputer 130 that assigns a home code to electronic devices belonging to the same group and sends commands to the electronic devices so as to monitor their states and control their operations, a database 140 that can store information about the electronic devices, such as for example, general information, control state information, and network or sub network information, an input unit 110 that receives user input and sends them to the microcomputer 130, and a communication module 150 that generates and broadcasts a home code and communicates with the electronic devices.

In accordance with another embodiment, the network manager 100 may further include a display unit 120 that displays network status information and the result of control commands in response to a control signal of the microcomputer 130. An easy-to-use user interface may be offered by implementing the display unit 130 as a touch panel embedded in the input unit 110, for example.

In embodiments where the network N is established on power lines, the communication unit 150 may, for example, be a power line modem. In embodiments using a wireless network, the communication unit 150 may be implemented as a radio-frequency (RF) modem, for example.

Each electronic device generally comprises, for example, a communication module 250 that receives control commands from the home server or the network manager 100, sends the control results, and performs operations of setting/clearing a home code and a microcomputer 230 that executes operations of reading signals, sending control results to the home server or network manager 100, and setting/clearing a home code that may be assigned by the network manager 100 into the communication module 250 according to control commands transmitted from the home server or network manager 100.

In one embodiment, the communication module 250 may be implemented as a power line modem when the network N is configured on power lines. In another embodiment, a wireless network is used and the communication module 250 is a RF modem.

When an electronic device is initially connected to the network N or the initial configuration of a home network is completed, a network administrator sends a home code request message to the network manager 100. Upon receiving the request, the microcomputer 130 determines whether the request is for the initial set-up (i.e., initialization) of a home code or for the connection of a device to the home network.
In order to determine which request is being sent, the microcomputer 130 first broadcasts a message to the home network N that requests a response from electronic devices. One example of such a request may be a device name request message. If a home code has been set in the communication unit 150, the home code may be included in the broadcast message. If an electronic device responds to the broadcast message, the home network N may determine that a new device has been connected to the network. If there is no response to the home code request, then the network N may treat the request as an initial set-up of the home network.

In another embodiment, to initialize a home network, the network manager 100 may execute operations to create a new home code and to send the home code to each of the plurality of electronic devices. To accomplish this, the microcomputer 130 sends a command to make the communication unit 150 generate a home code and then broadcasts a message. The home code is created in the communication unit 150 by using a random number generation algorithm. An initialization message is broadcast with the home code included in its message header. If there is a response, then the home code may be being used in other home networks and the network manager 100 performs operations for generating another home code.

Due to interconnectivity between powerlines in a neighborhood, signals within a home network can be transmitted to other home networks. Same effect may take place in neighboring wireless communication networks. Therefore, if a neighboring home network has the same home code, undesirable data transmission between electronic devices in different home networks may destroy security and privacy protection.
Hence, after generating a home code, the network manager 100 determines if there exists a home network whose home code is the same as the generated home code by broadcasting a message to all electronic devices connected to the network, and then receiving and examining the responses from them. If it is determined that another home network is using the same home code, a command may be sent to the communication unit 150 where another home code is generated. If it is determined that the home code is not being used in other networks, a message is broadcast to the network N to make the plurality of electronic devices set the home code to their own communication modules 250.

If it is determined that a new device is connected to the network N, the network manager 100 broadcasts a message to the network N to make the device receive a home code that has been stored in the communication unit 150. Upon receiving the message, each of the plurality of devices may send a command to set the home code to its own communication module, but the newly connected device only sets the received home code to its communication module 250.

After setting a home code to each of the plurality of devices is completed, a communication module 250 in each of the plurality of devices receives a message with a header including the same home code and transfers the message to microcomputer 250. Consequently, it may be possible to prevent data exchange between devices belonging to different home networks due to the sharing of a communication channel.
Fig. 3 is a flowchart illustrating the method of setting a home code in a home network in accordance with one embodiment of the invention. A request to set a home code is made by a user after setting up a home network to install a new device in a home network (S1). The network manager determines if the request is due to the initial network set-up or the connection of a new device (S2). If there is any response to a broadcast message from one or more devices in the network (S3), a new device may be recognized as being installed to the network and a home code that has been stored in the network manager is sent and set to the new device (S4). If there is no response, a home code is created and set to the newly established home network (S5).
Then, it is determined whether or not the created home code is being used in other home networks or sub-networks by broadcasting a message and examining the responses to the message (S6). If other networks are using the same home code, the home code is deleted and the step of creating a home code is executed again, until a non-duplicative home code is created. Then a message is broadcast to set the home code into one or more devices connected to the network. After receiving the message to set the home code, each device sets the home code in its own communication module by sending a home code set command (S7).
In one embodiment, the communication module in which a home code has been stored already may ignore a home code set command. The network manager determines automatically whether the home code set request is due to the initial network establishment or the connection of a new device. Depending on the result, the network manager may assign an already-used home code to the device that is newly connected to the network or may create a new home code and assign the created home code to all of devices connected to the network.

The method of assigning a unique home code in a home network according to the present invention enables a home network administrator to request a home code irrespective of whether the home code is required by initial home network establishment or the connection of a new device, thereby making network administration easier and less error-prone.

The embodiments described above are to be considered in all aspects as illustrative only and not restrictive in any manner. Thus, other exemplary embodiments, system architectures, platforms, and implementations that can support various aspects of the invention may be utilized without departing from the essential characteristics described herein. These and various other adaptations and combinations of features of the embodiments disclosed are within the scope of the invention. The invention is defined by the claims and their full scope of equivalents.

## Claims

1. A method of assigning a network code to devices connected to a home network, the method comprising:
determining whether a network code is requested to initialize a home network;
determining whether a network code is requested to add a device to the home network;
creating a network code, when it is determined that the request is for initializing a home network;
determining whether or not the created network code is in use; and
assigning the created network code to at least a device connected to the home network, when the created network code is not in use.

2. The method as set forth in claim 1, further comprising:
broadcasting a first message to request at least one of initializing a home network and adding a device to the home network,
wherein if there is no response to the first message, it is determined that the home network code was requested to initialize the home network.

3. The method as set forth in claim 1, further comprising:
broadcasting a first message to request at least one of initializing a home network and adding a device to the home network,
wherein if there is a response to the first message, it is determined that the home network code was requested to add a device to the home network.

4. The method as set forth in claim 1, further comprising:
broadcasting a second message requesting a response from a device connected to the home network,
wherein if there is a response to the second message, it is determined that the created network code is being used.

5. The method as set forth in claim 1, further comprising:
broadcasting a second message requesting a response from a device connected to the home network,
wherein if there is no response to the second message, it is determined that the created network code is not being used.

6. The method as set forth in claim 1, wherein created network code is in use if the network code is assigned to a second network connected to the home network.

7. The method of claim 6, wherein the second network is connected to the home network via at least one of a wired and wireless communication means.

8. The method as set forth in claim 6 further comprising:
creating a second network code if the created network code is in use.

9. The method as set forth in claim 1, wherein if it is determined that the home network code request is for adding a device to the home network, a previously created network code is provided to a newly connected device.

10. A home network system to which at least one device is connected, the home network comprising:
a device having states and operations that can be monitored and controlled through the home network; and
a network manager that, upon a request for a network code, determines whether the home network code is requested to at least one of initialize the home network and to add a device to the home network.

11. The home network system of claim 10, wherein the network manager creates a network code if it is determined that the request is for network initialization.

12. The home network system of claim 10, wherein the network manager determines whether the created network code is being used.

13. The home network system of claim 12, wherein the network manager assigns the created network code to devices connected to the home network, if it is determined that the created network code is not being used.

14. The home network system as set forth in claim 10, wherein the home network manager comprises:
a communication module that creates the home network code and communicates with the home network; and
a control module that determines whether the home network code is requested to initialize the home network or to add a device to the home network, wherein if it is determined that the request is to initialize the home network, the control module sends a command to the communication module to create a network code, determine whether the created network code is being used in other networks, and broadcasts the created network code to the home network in a first message via the communication module if the created network code is not being used in other networks.

15. The home network system as set forth in claim 14, wherein the created network code is included in a header of the first message.

16. The home network system as set forth in claim 14, wherein the home network manager broadcasts a second message to request a response from devices connected to the home network, and if there is no response to the second message, the home network manager determines that the home network code request was made to initialize the home network.

17. The home network system as set forth in claim 14, wherein the home network manager broadcasts a second message to request a response from devices connected to the home network, and if there is a response to the second message, the home network manager determines that the home network code request was made to add a device to the home network.

18. The home network system as set forth in claim 14, wherein after creating a network code, the home network manager broadcasts a message that requests a response to the home network, and if there is a response to the message, determines that the created network code is being used, and determines that the created network code is not being used in other networks, if there is no response to the message.
